# EUROPEAN PATENT SPECIFICATION

(11) **EP 3 476 630 B1**
(45) Date of publication and mention of the grant of the patent: **18.11.2020**
(21) Application number: 18202773.0
(22) Date of filing: 26.10.2018
(51) Int. Cl.: B60H 1/00, F25B 45/00, F25B 49/00

(54) **SERVICE UNIT FOR A VEHICLE-AIR CONDITIONING SYSTEM AND METHOD FOR OPERATING A SERVICE UNIT**
SERVICE-EINHEIT FÜR EIN FAHRZEUGKLIMATISIERUNGSSYSTEM UND VERFAHREN ZUM BETRIEB EINER SERVICE-EINHEIT
UNITÉ DE SERVICE POUR UN SYSTÈME DE CONDITIONNEMENT D'AIR DE VÉHICULE ET PROCÉDÉ POUR FAIRE FONCTIONNER UNE UNITÉ DE SERVICE

(30) Priority: 27.10.2017 DE 102017219353
(43) Date of publication of application: 01.05.2019
(73) Proprietor: Dometic Sweden AB, 171 54 Solna (SE)
(72) Inventor: Esch, Franz-Josef, 48477 Hörstel (DE)
(74) Representative: Grosse Schumacher Knauer von Hirschhausen

(56) References cited:
- EP-A1- 2 507 081
- EP-A1- 2 616 258
- DE-A1-102012 011 323

## Description

The present invention relates to a service unit for a vehicle- air conditioning system and a method for operating such a service unit.

Commonly, the service units for vehicle- air conditioning systems known from the state of the art comprise of a housing with at least one coolant storage tank, an inlet opening and an outlet opening. In addition, there is provided a ventilation means being coupled to the housing and configured to generate an air flow from the inlet opening to the outlet opening.

In recent times, the coolant to be used with vehicle air- conditioning systems is either a CO₂ based coolant or a coolant based on 2,3,3,3-Tetrafluoropropene which is commonly known as R1234yf. The reason to do so is that the coolants used in former times have a distinctly higher global warming potential (GWP), for example the coolant commonly known as R134a has a GWP which is about four times the GWP or R1234yf. Thus, by legal reasons it is not possible to use R134a in newly developed vehicles any longer, but the air conditioning system needs to be operated by one of the alternative coolants. Here, R1234yf has widely become accepted. However, there are also specific characteristics associated with the usage of R1234yf. In particular, safety reasons are a major issue as R1234yf is highly flammable and explosive when a certain percental amount in the air is exceeded. This is especially critical in case hot components are placed near a R1234yf source, like a pump, a motor or an exhaust system. In addition, combustion of R1234yf further results in the release escharotic and poisonous residues, which can be further harmful to the environment.

As such, great care has to be taken when maintenance work is carried out on vehicle- air conditioning systems. Service units for vehicle air- conditioning systems serve among other things to drain the coolant circuit of a wide variety of vehicle air-conditioning systems from time to time and to introduce a new coolant filling during maintenance. This process is described in detail for example in EP 2 616 258 A1.

During operation of the service unit it is necessary to reduce the risk of explosion and the health risk for the person operating the service unit as much as possible, as gaseous R1234yf might accumulate within the housing of the service unit. In case a critical concentration of gaseous R1234yf is reached, the risk for the person operating the service unit is increased.

To greatly reduce the risk, the service units are equipped with some kind of aeration or duct mechanism. Often, ventilation means are used which are configured to generate an air flow from the inlet opening to the outlet opening of the housing of the service unit. According to the invention, it has to be warranted that the air exchange within the housing per time unit (for example per hour) is over a certain level, for example of at least six times per hour. However, in case of malfunction of the ventilation means this air exchange will likely not be achieved, again increasing the risk for the person using the service unit.

Of course, it is possible to monitor if the ventilation means is running without much effort. But this will not directly allow to derive the actual air exchange within the housing. For instance, in case the fan assembly is blocked, for example by some textile material like a rag, the air exchange per hour will be greatly reduced although the fan assembly is running. This in turn could lead to a dangerous and undetected accumulation of gaseous R1234yf within the housing. The same is possible if the ventilation means itself is damaged, for example in case one of its blades is damaged or lost. Thus, the air exchange per hour will be greatly reduced although the ventilation means is running.

Hence, it is the technical objective to provide a service unit for a vehicle- air conditioning system where the actual air exchange and/ or a dangerous accumulation of coolant, in particular of R1234yf, within the housing of the service unit can reliably be monitored and detected. In addition, it is an objective to provide a method for operating the inventive service unit.

These problems are solved by a service unit as defined in claim 1 and by a method for operating such a service unit as defined in claim 10. Preferred embodiments are described in the dependent claims.

The service unit for a vehicle- air conditioning system according to the present invention comprises a housing comprising at least one coolant storage tank, an inlet opening and an outlet opening. The service unit further comprises a ventilation means being configured to generate an air flow from the inlet opening to the outlet opening. The service unit according to the invention is characterized over the prior art in that an air flow sensor is disposed within the housing and the air flow sensor is configured to measure the volume flow rate of air. Preferably, the at least one ventilation means is a fan assembly, which is mounted at least indirectly to the housing. Preferably, the fan assembly is fixed to the housing. Of course, all other suitable means being capable of generating an air flow from the inlet opening to the outlet opening fall within the scope of the present invention. The ventilation means is preferably mounted to the exterior of the housing. Alternatively, the ventilation means can also be mounted to the interior of the housing, as long as an air flow from the inlet opening to the outlet opening can be generated by the ventilation means.

Thus, it is possible to measure the actual air flow within the housing from the inlet opening to the outlet opening. This in turn allows for a reliable conclusion about the air exchange with the housing per time unit. Thus, in case the ventilation means is blocked, for example by a textile material, the volume flow rate of air within the housing will drop despite the ventilation means being active. This drop in the volume flow rate of air is reliably monitored with the inventive service unit and dangerous situations arising from an unwanted accumulation of coolant, and R1234yf in particular, can be inhibited. In addition, measuring the volume flow rate of air with the air flow sensor also allows to detect other malfunctions of the ventilation means which can lead to a drop in air exchange, for example damaged blades of in case the ventilation means is a fan assembly or a broken connection between a ventilation means drive and an impeller. Moreover, measuring and controlling the volume flow rate of air with the air flow sensor basically also enables an adjustment of the volume of airflow according to a predetermined level, to an air exchange within the housing per time unit which is over a certain level, specifically of at least six times per hour.

Preferably, the air flow sensor is a thermal mass flow sensor. Such sensors are also known as thermal mass flow meters. A thermal mass flow sensor has the advantage that no moving parts are necessary to measure the volume flow rate of air. Thus, this greatly reduces the risk of malfunction or inaccurate measurements. In addition, said sensors are compact and allow for a virtually unobstructed straight through flow path. Further, the calibration effort is distinctly reduced as a thermal mass flow sensor does not require temperature and/ or pressure corrections and retains a high accuracy over a wide range of volume flow rates of air.

Preferably, a baffle plate is located within the housing adjacent to the inlet opening. With the baffle plate the air flow can be channeled allowing for a precise measurement and a defined and unobstructed air flow path of air through the housing.

Preferably, the air flow sensor is positioned on the baffle plate. Thus, the air flow sensor can be positioned directly in the air flow path so that precise and reliable measurement results can be achieved. Furthermore, the influence of other components within the housing of service unit affecting the volume flow rate of air are excluded.

Preferably, the air flow sensor is spaced from the inlet opening between 30 mm and 50 mm, preferably by 35 mm to 45 mm. Most preferably, the air flow sensor is spaced by 41 mm. Within a test series it has been confirmed that the results are most reliable with only little to no deviation of the actual volume flow rate of air through the housing.

Preferably, the ventilation means is mounted on an exterior of the housing proximate to the inlet opening. This inhibits recirculation of air within the housing. Recirculation could lead to an accumulation of coolant within the housing, despite a sufficient volume flow rate of air. This risk, however, is greatly reduced when the ventilation means is located so that only ambient air is sucked into the housing of the service unit.

Preferably, the service unit further comprises a controlling means. The controlling means is preferably configured to monitor and process the measurements of volume flow rate of air delivered by the air flow sensor. Preferably, the controlling means is configured to manipulate the speed of the ventilation means based on the volume flow rate of air measured by the air flow sensor. Thus, in case the air exchange level within the housing is too low, the controlling means can set the speed of the ventilation means to a higher level allowing for an increased air exchange. In turn, in case the air exchange level within the housing is too high, the speed of the ventilation means can be reduced by the controlling means to safe energy. By the controlling means further specific characteristics of the ventilation of the service unit can be adjusted, for example the start time of the ventilation means in case of power up of the service unit or the stop time of the ventilation means after power shut down of the service unit. Hence, it is warranted that an optimal air exchange within the housing is achieved in the intended extent at any time during use of the service unit.

Preferably, the ventilation means is driven by an electrical motor, wherein the controlling means is further configured to measure the speed of the electrical motor. Thus, this allows for a redundant monitoring of air exchange within the housing.

Preferably, the controlling means is further configured to trigger an alarm signal in case the volume flow rate of air and/ or the speed of the electrical motor drops below a predetermined threshold value. In this case, the person operating the service unit can stop the process associated with the vehicle- air conditioning system and can avoid critical situations for the person's health. In addition, it is also possible that the controlling means shuts down the entire service unit so that any further leakage of gaseous coolant can be avoided.

The inventive method for operating a service unit for a vehicle- air conditioning system as described above comprises the following steps:
Measuring the volume flow rate of air with the air flow sensor in an operated state of the service unit;
comparing the measured volume flow rate of air with a set value for the volume flow rate of air; and
increasing the speed of the ventilation means when the measured volume flow rate of air is below the set value; or
decreasing the speed of the ventilation means when the measured volume flow rate of air is above the set value.

Thus, this allows to maintain the preset value of air exchange within the housing per time unit within a specific predetermined range or on a predetermined level, for example six times per hour. As such, dangerous accumulation of gaseous coolant, and in particular of R1234yf, can be avoided. Preferably, the set value for the volume flow rate of air is preset by the user or manufacturer of the service unit.

In the following, a preferred embodiment of the inventive service unit will be described with reference to the drawings. Therein it is shown in
- Fig. 1: a partial cross sectional side view of a service unit;
- Fig. 2: a detailed view of the detail A shown in Fig. 1;
- Fig. 3: a cross sectional top view along the line B-B shown in Fig. 1; and
- Fig. 4: a detailed view of the detail C shown in Fig. 3.

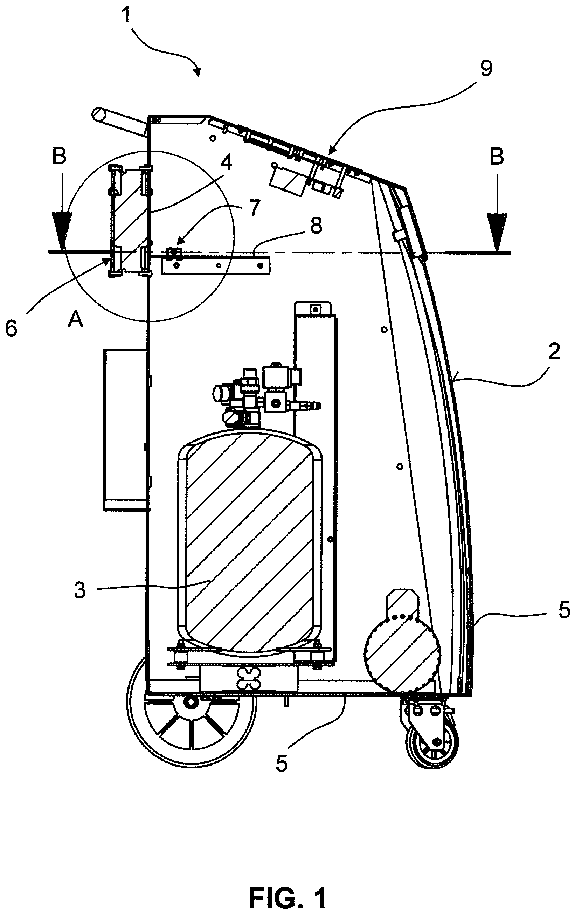

In Fig. 1 there is shown a partial cross section of a service unit 1 for a vehicle- air conditioning system. The service unit 1 comprises a housing 2 and at least one coolant storage tank 3 which is disposed within the housing 2. The housing 2 is movably mounted on wheels so that the service unit 1 can easily be moved by a person operating the service unit 1. When in operation, gaseous coolant like R1234yf can accumulate within the housing 2. To avoid accumulation of coolant in the housing, the housing 2 comprises an inlet opening 4 and an outlet opening 5. As can be seen in Fig. 1, the inlet opening 4 is disposed in an upper portion of the housing 2. As can be further seen in Fig. 1, the outlet opening 5 is disposed in a lower portion of the housing 2. In addition, the inlet opening 4 is disposed on a rear side (that is to the left in Fig. 1) of the housing 2, whereas the outlet opening is disposed on a front side (that is to the right in Fig. 1) of the housing 2. In the present embodiment, the outlet opening 5 consists of a plurality of outlet openings 5. The plurality of outlet openings 5 is located in the lower portion of the housing 2, namely on the lower front side of the housing 2 as well as on the bottom side of the housing 2. Whereas the outlet opening 5 located on the lower front side of the housing 2 is in form of a ventilation grill, the outlet opening 5 on the bottom side of the housing 2 is in from of a plurality of ventilation openings, for example openings having a round shape, being distributed over the bottom side of the housing 2.

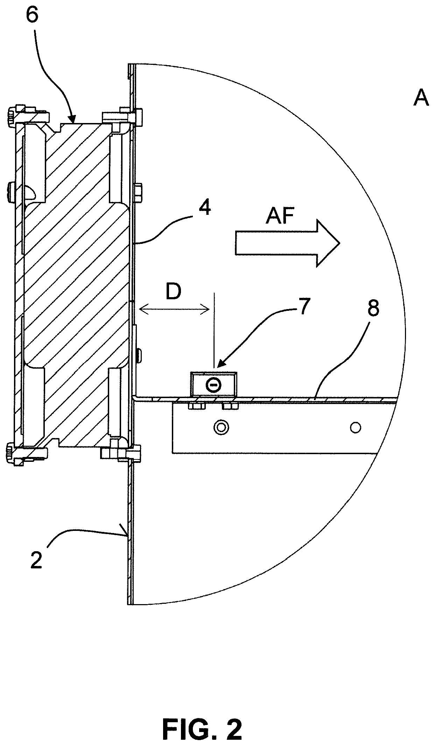

To generate an air flow AF (see Fig. 2) from the inlet opening 4 to the outlet opening 5 the service unit 1 comprises at least one ventilation means 6. In the present embodiment the ventilation means is a fan assembly 6 configured to generate an air flow. As can be seen in detail A as shown in Fig. 2, the fan assembly 6 is fixed to an exterior of the housing 2 via screws. As a matter of course, the fan assembly can be mounted differently to the housing also, and intermediate means can be disposed in between. In particular, the fan assembly 6 is fixed to the housing 2 directly in proximity to the inlet opening 4. In operation, the fan assembly 6 sucks ambient air through the inlet opening 4 into the housing. The air is further guided through the housing 2 and exits again through the outlet opening 5 thereby creating the air flow AF.

In practice, the air exchange within the housing 2 is set to be a specific number of times per hour so that any dangerous accumulation of R1234yf within the housing is avoided. Here, the air exchange within the housing 2 is set to be six times per hour. Thus, assuming that the housing 2 has a free volume of 40 liters, the fan assembly 6 has to be configured to allow for a volume flow rate of air of at least 240 liters per hour.

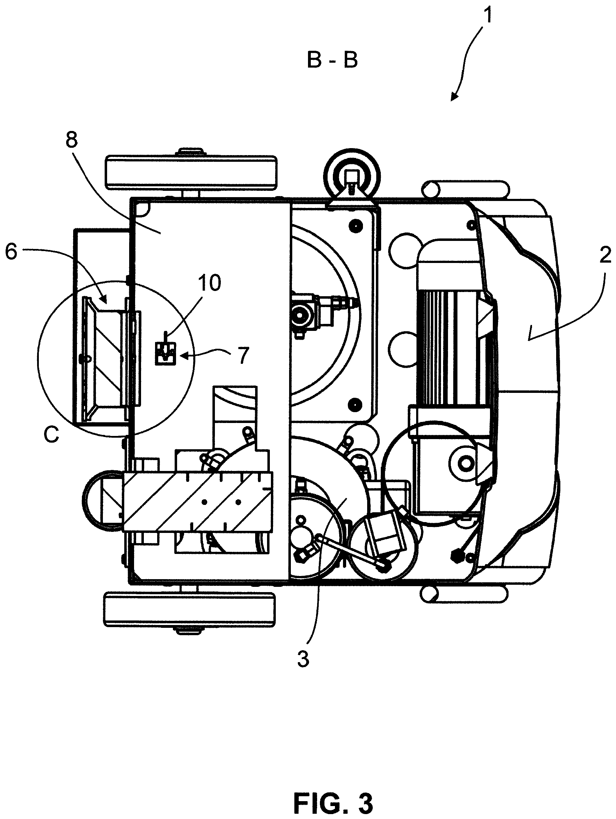

To warrant and monitor the set air exchange rate within the housing 2, there is provided an air flow sensor 7. As can be seen in Figs. 1 to 4, the air flow sensor 7 is positioned in near proximity to the inlet opening 4 and hence the fan assembly 6. In this particular embodiment, the air flow sensor 7 is spaced from the inlet opening by a distance D of about 35 mm to 45 mm. Preferably, the distance D is 41 mm. The particularities of the air flow sensor 7 will be described in more detail below.

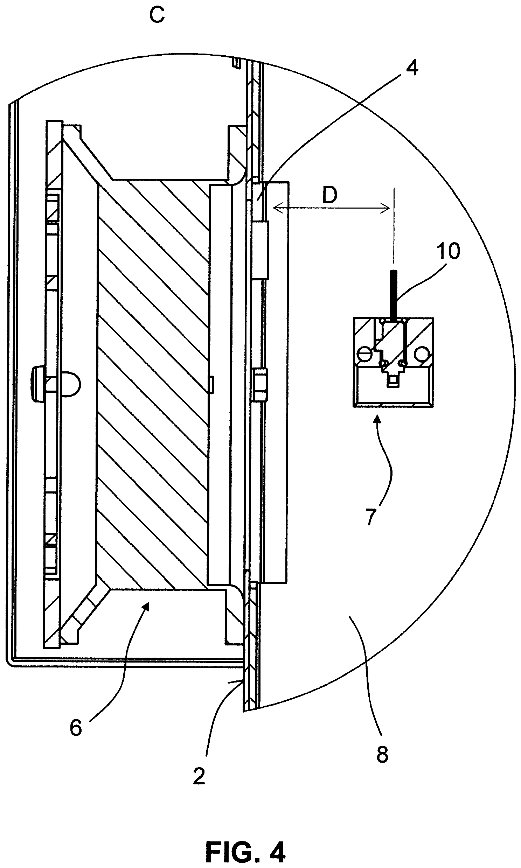

In addition, there is provided a baffle plate 8 within the housing 2. The baffle plate 8 is disposed within the housing 2 so that the air flow AF is channeled in the upper portion of the housing 2 in the area of the inlet opening 4. As can be seen in detail A in Fig. 2 and detail C in Fig. 4, the air flow sensor 7 is mounted on the baffle plate 8.

Furthermore, the service unit 1 comprises a controlling means 9. The controlling means 9 is configured to control the speed of the fan assembly 6 based on measurements of the air flow sensor 7. In addition, the controlling means 9 is configured to monitor, process and manipulate the activity of the fan assembly and in particular, to monitor the speed of an electrical motor (not shown) driving the fan assembly 6. Specifically, by the controlling means 9 the air exchange within the housing 2 can be set by the user or manufacturer to be a specific number of times per hour, as for example required by norms or operating specifications.

In this embodiment, the air flow sensor 7 is a thermal mass flow sensor. As shown in Fig. 4, the air flow sensor 7 comprises a sensing element 10 which protrudes from the air flow sensor 7. The sensing element 10 senses the volume flow rate of air within the housing 2. In particular, the sensing element 10 measures the volume flow rate based upon the concept of convective heat transfer, which is well known and will not be described in more detail herein.

The particular layout of the described embodiment of the service unit 1 allows to achieve reliable measurement results of the volume flow rate of air. On the one hand that is because the fan assembly 6 is mounted to the exterior of the housing 2 so that intake or recirculation of air from inside the housing 2 is greatly avoided. On the other hand, the baffle plate 8 with the thereon mounted air flow sensor 7 allows for a precise measurement as disturbance influencing the air flow AF are substantially excluded. Finally, placing the air flow sensor 7 and the sensing element 10 respectively at the distance D of 35 mm to 45 mm delivers optimal measurement results.

Based on the processed measurement results of the air flow sensor 7 the controlling means 9 manipulates the speed of the fan assembly 6. The controlling means 9 therefore compares the measured volume flow rate with a set value and increases the speed of the fan assembly 6 in case the measured volume flow rate of air is below the set value. In turn, when the measured volume flow rate is above the set value, the controlling means 9 decreases the speed of the fan assembly 6 to save energy.

In addition, the controlling means 9 also monitors the speed of the electrical motor and is configured to trigger an alarm signal in case a malfunction is detected. For instance, in case one of the fan impellers of the fan assembly 6 is broken, the air flow AF will be amended and will drop below the set value although the fan assembly 6 is driven by the electrical motor at the desired speed. In this case, the air flow sensor 7 will deliver a volume flow rate of air which is below the set value and the controlling means 9 recognizes that there is a problem in upholding the desired air exchange rate based on the set value. Thus, the controlling means 9 will trigger an alarm signal and eventually will even shut down the service unit 1 to avoid any dangerous accumulation of gaseous R1234yf within the housing 2.

### REFERENCE SIGNS

- 1: service unit
- 2: housing
- 3: coolant storage tank
- 4: inlet opening
- 5: outlet opening
- 6: ventilation means/ fan assembly
- 7: air flow sensor
- 8: baffle plate
- 9: controlling means
- 10: sensing element

- AF: air flow
- D: distance

## Claims

1. Service unit (1) for a vehicle- air conditioning system comprising:
a housing (2) comprising at least one coolant storage tank (3), an inlet opening (4) and an outlet opening (5); and
at least one ventilation means (6) being configured to generate an air flow from the inlet opening (4) to the outlet opening (5) during operation of the service unit and warranting that an air exchange within the housing (2) per time unit is over a certain level;
**characterized in that**
an air flow sensor (7) is disposed within the housing (2), the air flow sensor (7) being configured to measure the volume flow rate of air allowing for a reliable conclusion about the air exchange within the housing (2) per time unit.

2. Service unit (1) according to claim 1,
**characterized in that**
the air flow sensor (7) is a thermal mass flow sensor.

3. Service unit (1) according to claim 1 or 2,
**characterized in that**
a baffle plate (8) is located within the housing (2) adjacent to the inlet opening (4).

4. Service unit (1) according to claim 3,
**characterized in that**
the air flow sensor (7) is positioned on the baffle plate (8).

5. Service unit (1) according to any one of the preceding claims,
**characterized in that**
the air flow sensor (7) is spaced from the inlet (4) opening between 30 mm and 50 mm, preferably by 35 mm to 45 mm.

6. Service unit (1) according to any one of the preceding claims,
**characterized in that**
the ventilation means (6) is mounted on an exterior of the housing (2) proximate to the inlet opening (4).

7. Service unit (1) according to any one of the preceding claims,
**characterized in that**
the service unit (1) further comprises a controlling means (9), the controlling means (9) being configured to manipulate the speed of the ventilation means (6) based on the volume flow rate of air measured by the air flow sensor (7).

8. Service unit (1) according to claim 7,
**characterized in that**
the ventilation means (6) is driven by an electrical motor, wherein the controlling means (9) is further configured to measure the speed of the electrical motor.

9. Service unit according to claim 7 or 8,
**characterized in that**
the controlling means (9) is further configured to trigger an alarm signal in case the volume flow rate of air and/ or the speed of the electrical motor drops below a predetermined threshold value.

10. Service unit according to any one of the preceding claims,
**characterized in that**
the at least one ventilation means (6) is a fan assembly.

11. Method for operating a service unit (1) according to any one of the preceding claims comprising the following steps:
measuring the volume flow rate of air with the air flow sensor (7) in an operated state of the service unit;
comparing the measured volume flow rate of air with a set value for the volume flow rate of air; and
increasing the speed of the ventilation means (6) when the measured volume flow rate of air is below the set value; or
decreasing the speed of the ventilation means (6) when the measured volume flow rate of air is above the set value.

12. Method for operating a service unit (1) according to claim 11, wherein
the set value for the volume flow rate of air is preset by the user or manufacturer.

## Patentansprüche

1. Wartungseinheit (1) für ein Fahrzeug-Klimaanlagensystem, umfassend:
ein Gehäuse (2), das mindestens einen Kühlmittelvorratsbehälter (3), eine Einlassöffnung (4) und eine Auslassöffnung (5) umfasst; und
mindestens ein Belüftungsmittel (6), das so konfiguriert ist, dass es während des Betriebs der Wartungseinheit einen Luftstrom von der Einlassöffnung (4) zur Auslassöffnung (5) erzeugt und gewährleistet, dass ein Luftaustausch innerhalb des Gehäuses (2) pro Zeiteinheit über einem bestimmten Niveau liegt;
**dadurch gekennzeichnet, dass**
ein Luftstromsensor (7) innerhalb des Gehäuses (2) angeordnet ist, wobei der Luftstromsensor (7) so konfiguriert ist, dass er den Volumenstrom der Luft misst, was eine zuverlässige Schlussfolgerung über den Luftaustausch innerhalb des Gehäuses (2) pro Zeiteinheit zulässt.

2. Wartungseinheit (1) nach Anspruch 1,
**dadurch gekennzeichnet, dass**
der Luftstromsensor (7) ist ein thermischer Massenstromsensor.

3. Wartungseinheit (1) nach Anspruch 1 oder 2,
**dadurch gekennzeichnet, dass**
eine Prallplatte (8) innerhalb des Gehäuses (2) neben der Einlassöffnung (4) angeordnet ist.

4. Wartungseinheit (1) nach Anspruch 3,
**dadurch gekennzeichnet, dass**
der Luftstromsensor (7) auf der Prallplatte (8) positioniert ist.

5. Wartungseinheit (1) nach einem der vorstehenden Ansprüche,
**dadurch gekennzeichnet, dass**
der Luftstromsensor (7) von der Öffnung des Einlasses (4) zwischen 30 mm und 50 mm, vorzugsweise um 35 mm bis 45 mm, beabstandet ist.

6. Wartungseinheit (1) nach einem der vorstehenden Ansprüche,
**dadurch gekennzeichnet, dass**
das Lüftungsmittel (6) an einer Außenseite des Gehäuses (2) in der Nähe der Einlassöffnung (4) angebracht ist.

7. Wartungseinheit (1) nach einem der vorstehenden Ansprüche,
**dadurch gekennzeichnet, dass**
die Wartungseinheit (1) ferner eine Steuereinrichtung (9) umfasst, wobei die Steuereinrichtung (9) so konfiguriert ist, dass sie die Geschwindigkeit des Lüftungsmittels (6) basierend auf der von dem Luftstromsensor (7) gemessenen Volumenflussrate der Luft manipuliert.

8. Wartungseinheit (1) nach Anspruch 7,
**dadurch gekennzeichnet, dass**
das Lüftungsmittel (6) von einem Elektromotor angetrieben wird, wobei die Steuereinrichtung (9) ferner so konfiguriert ist, dass sie die Geschwindigkeit des Elektromotors misst.

9. Wartungseinheit nach Anspruch 7 oder 8,
**dadurch gekennzeichnet, dass**
die Steuereinrichtung (9) ferner so konfiguriert ist, dass sie ein Alarmsignal auslöst, wenn die Volumenflussrate der Luft und/oder die Drehzahl des Elektromotors unter einen vorbestimmten Schwellenwert fällt.

10. Wartungseinheit gemäß einem der vorstehenden Ansprüche,
**dadurch gekennzeichnet, dass**
das mindestens eine Lüftungsmittel (6) eine Ventilatorbaugruppe ist.

11. Verfahren zum Betreiben einer Wartungseinheit (1) gemäß einem der vorstehenden Ansprüche, das die folgenden Schritte umfasst:
Messen der Volumenflussrate der Luft mit dem Luftstromsensor (7) in einem Betriebszustand der Wartungseinheit;
Vergleichen der gemessenen Volumenflussrate der Luft mit einem Sollwert für die Volumenflussrate der Luft; und
Erhöhung der Geschwindigkeit des Lüftungsmittels (6), wenn die gemessene Volumenflussrate der Luft unter dem eingestellten Wert liegt; oder
Verringern der Geschwindigkeit des Lüftungsmittels (6), wenn die gemessene Volumenflussrate der Luft über dem eingestellten Wert liegt.

12. Verfahren zum Betreiben einer Wartungseinheit (1) nach Anspruch 11, wobei der Sollwert für die Volumenflussrate der Luft vom Anwender oder Hersteller voreingestellt wird.

## Revendications

1. Unité de service (1) pour un système de conditionnement d'air de véhicule comprenant :
un boîtier (2) comprenant au moins un réservoir de stockage (3) de fluide réfrigérant, une ouverture d'entrée (4) et une ouverture de sortie (5) ; et
au moins un organe de ventilation (6) configuré pour générer un débit d'air depuis ladite ouverture d'entrée (4) vers ladite ouverture de sortie (5) pendant l'opération de l'unité de service et garantir qu'un échange de l'air à l'intérieur du boîtier (2) par unité de temps dépasse un certain niveau ;
**caractérisée en ce que**
un capteur de débit d'air (7) est disposé à l'intérieur du boîtier (2), ledit capteur de débit d'air (7) étant configuré pour mesurer le débit volumétrique d'air qui permet une conclusion fiable concernant l'échange de l'air à l'intérieur du boîtier (2) par unité de temps.

2. Unité de service (1) selon la revendication 1,
**caractérisée en ce que**
ledit capteur de débit d'air (7) est un débitmètre massique thermique.

3. Unité de service (1) selon la revendication 1 ou 2,
**caractérisée en ce que**
une plaque déflectrice (8) est située à l'intérieur du boîtier (2) adjacent à ladite ouverture d'entrée (4).

4. Unité de service (1) selon la revendication 3,
**caractérisée en ce que**
ledit capteur de débit d'air (7) est positionné sur ladite plaque déflectrice (8).

5. Unité de service (1) selon l'une quelconque des revendications précédentes,
**caractérisée en ce que**
ledit capteur de débit d'air (7) est espacé de ladite ouverture d'entrée (4) d'une distance comprise entre 30 mm et 50 mm, de préférence entre 35 mm et 45 mm.

6. Unité de service (1) selon l'une quelconque des revendications précédentes,
**caractérisée en ce que**
ledit organe de ventilation (6) est monté sur l'extérieure du boîtier (2) à proximité de ladite ouverture d'entrée (4).

7. Unité de service (1) selon l'une quelconque des revendications précédentes,
**caractérisée en ce que**
ladite unité de service (1) comprend en outre des moyens de commande (9), lesdits moyens de commande (9) étant configurés pour manipuler la vitesse dudit organe de ventilation (6) sur la base du débit volumétrique d'air mesuré par ledit capteur de débit d'air (7).

8. Unité de service (1) selon la revendication 7,
**caractérisée en ce que**
ledit organe de ventilation (6) est entraîné par un moteur électrique, lesdits moyens de commande (9) étant en outre configurés pour mesurer la vitesse du moteur électrique.

9. Unité de service (1) selon la revendication 7 ou 8,
**caractérisée en ce que**
lesdits moyens de commande (9) sont en outre configurés pour déclencher un signal d'alarme au cas où le débit volumétrique d'air et/ou la vitesse du moteur électrique tombe au-dessous d'une valeur de seuil prédéterminé.

10. Unité de service (1) selon l'une quelconque des revendications précédentes,
**caractérisée en ce que**
ledit au moins un organe de ventilation (6) est un ensemble ventilateur.

11. Procédé pour faire fonctionner une unité de service (1) selon l'une quelconque des revendications précédentes comprenant les étapes suivantes :
mesurer le débit volumétrique d'air avec ledit capteur de débit d'air (7) dans un état opérationnel de ladite unité de service ;
comparer le débit volumétrique d'air mesuré avec une valeur définie du débit volumétrique d'air ; et augmenter la vitesse dudit organe de ventilation (6) lorsque le débit volumétrique d'air mesuré est inférieur à ladite valeur définie ; ou
réduire la vitesse dudit organe de ventilation (6) lorsque le débit volumétrique d'air mesuré est supérieur à ladite valeur définie.

12. Procédé pour faire fonctionner une unité de service (1) selon la revendication 11, dans lequel ladite valeur définie pour le débit volumétrique d'air est prédéfinie par l'utilisateur ou le fabricant.
